Europäisches Patentamt

European Patent Office

Office européen des brevets

(11) **EP 4 485 266 A1**

(12) **EUROPEAN PATENT APPLICATION**

(43) Date of publication:
**01.01.2025 Bulletin 2025/01**

(21) Application number: **24184881.1**

(22) Date of filing: **27.06.2024**

(51) International Patent Classification (IPC):
**G06F 30/27** $^{(2020.01)}$    G06F 111/06 $^{(2020.01)}$

(52) Cooperative Patent Classification (CPC):
**G06F 30/27;** G06F 2111/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.06.2023 IN 202331043402**

(71) Applicant: **Siemens Aktiengesellschaft
80333 München (DE)**

(72) Inventors:
• **KUMAR, Aman
110023 New Delhi (IN)**
• **SANFUI, Subhajit
560068 Bangalore, Karnataka (IN)**

(74) Representative: **Horn Kleimann Waitzhofer
Schmid-Dreyer
Patent- und Rechtsanwälte PartG mbB
Theresienhöhe 12
80339 München (DE)**

(54) **SYSTEM AND METHOD FOR PERFORMING STRUCTURAL TOPOLOGY OPTIMIZATION**

(57) A system (100) and method (200) for performing structural topology optimization for a structure is disclosed. The method comprises receiving from a client device, by a processing unit (115), an input indicative of one or more load vectors at one or more nodes in a design space corresponding to the structure. Further, a data-driven model is applied to the input for predicting a suboptimal topology for the structure. Based on the suboptimal topology predicted, an optimization solver is initialized. Further, one or more design variables corresponding to an optimal topology for the structure are computed using the initialized optimization solver. An output indicative of the optimal topology is provided on a user interface of the client device (110).

FIG 2

200

205

210

215

220

225

**Description**

TECHNICAL FIELD

The present invention relates to optimization techniques and more particularly relates to a system and method for performing structural topology optimization.

BACKGROUND

Optimization algorithms play a pivotal role in various fields, from engineering to machine learning. However, their practical implementation often faces significant challenges. The complexity of the optimization problem arises from intricate relationships between design variables, constraints, and objectives. Additionally, the search space-the range of possible solutions-can be vast. For instance, in structural optimization, the shape, size, and topology of a product must be optimized. This involves exploring a high-dimensional space of potential designs. As a result, optimization algorithms may require extensive computational resources and time to explore this large search space effectively.

Convergence criteria determine when an optimization algorithm stops searching for better solutions. Striking the right balance between accuracy and computational cost is crucial. In practical scenarios, delays in finding optimal solutions can impact product deployment. For instance, in material optimization, selecting the most efficient material affects product performance and manufacturing costs. Therefore, devising optimization methods that are computationally efficient become paramount.

Industrial product design involves multiple objectives (e.g., minimizing weight while maximizing strength) and nonlinear relationships between variables. Traditional optimization methods, such as Sequential Quadratic Programming (SQP), SIMP and BESO provide accurate solutions but can be computationally expensive. Data-driven approaches, like deep learning models, offer computational efficiency once trained. However, directly using their outputs can be challenging due to missing links and compliance deviations.

In other words, achieving a balance between accuracy and computational efficiency remains a challenge. Classical methods while accurate, are computationally expensive. Data-driven approaches, such as deep learning models, offer cost reduction but face challenges related to missing links and compliance deviations.

In light of the above, there exists a need for an improved system and method for performing structural topology optimization for a structure.

SUMMARY

A system and method for performing structural topology optimization for a structure is disclosed. In an embodiment, the method includes receiving from a client device, by a processing unit, an input indicative of one or more load vectors at one or more nodes in a design space corresponding to the structure. In an embodiment, the input comprises a two-channel input tensor corresponding to the load vectors. The method further includes applying a data-driven model to the input for predicting a suboptimal topology for the structure. In an embodiment, the data-driven model is a deep learning model. In a further embodiment, the deep learning model is a U-Net variational autoencoder. In an embodiment, the U-Net variational autoencoder is trained based on topology optimization code. The method further includes initializing an optimization solver based on the suboptimal topology predicted. In an embodiment, the optimization solver computes the optimal topology based on one of Solid Isotropic Material with Penalization (SIMP) topology optimization and Bi-directional Evolutionary Structural Optimization (BESO). The method further includes computing one or more design variables corresponding to an optimal topology for the structure using the initialized optimization solver. In an embodiment, the optimization solver computes the optimal topology based on one of Solid Isotropic Material with Penalization (SIMP) topology optimization and Bi-directional Evolutionary Structural Optimization (BESO). In an embodiment, the one or more design variables comprises density value. The method further includes providing an output indicative of the optimal topology on a user interface of the client device.

Disclosed herein is also an apparatus comprising one or more processing units and a memory unit communicatively coupled to the one or more processing units. The memory unit comprises an optimization management module stored in the form of machine-readable instructions executable by the one or more processing units, wherein the optimization management module is configured to perform method steps described above.

Disclosed herein is also a system comprising one or more clients and an apparatus as described above, communicatively coupled to the one or more clients. The apparatus is configured for performing structural topology optimization based on inputs received from the one or more client devices, according to the method steps described above.

Disclosed herein is also a computer-readable medium, on which program code sections of a computer program are saved, the program code sections being loadable into and/or executable by a processor which performs the method as described above when the program code sections are executed.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes and features of this invention and the manner of achieving them, will become more apparent and understandable (clear) with the following description of embodiments of the invention in conjunction with the corresponding drawings. The illustrated embodiments are intended to illustrate, but not limit the invention.

BRIEF DESCRIPTION OF FIGURES

The present invention is further described hereinafter with reference to illustrated embodiments shown in the accompanying drawings, in which:

FIG 1A illustrates a block diagram of a system for performing structural topology optimization, according to an embodiment of the present invention;

FIG 1B illustrates a block diagram of an apparatus for performing structural topology optimization, according to an embodiment of the present invention;

FIG 2 shows a flowchart of a method performing structural topology optimization, in accordance with an embodiment of the present invention;

FIG 3 shows a variational autoencoder in accordance with an embodiment of the present invention;

FIG 4 shows a U-Net variational autoencoder in accordance with an embodiment of the present invention;

FIG 5A shows schematic representation of a two-channel input tensor in accordance with an embodiment of the present invention;

FIG 5B shows a schematic representation of a loaded cantilever beam, in accordance with an embodiment of the present invention; and

FIG 6A-6F show test results corresponding to different topology optimization methods.

DETAILED DESCRIPTION

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth to provide a thorough under-standing of one or more embodiments. It may be evident that such embodiments may be practiced without these specific details.

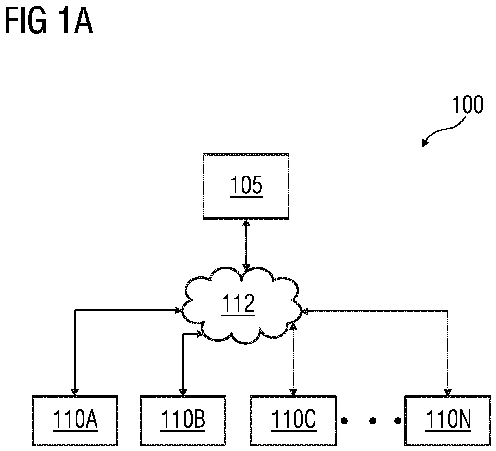

FIG 1A illustrates a block diagram of a system 100 for performing structural topology optimization, according to an embodiment of the present invention.

The system 100 includes an apparatus 105 and a plurality of client devices 110AN (collectively referred hereinafter as client device 110). Each of the client devices 110A-N is connected to the apparatus 105 via a network 112, for example, local area network (LAN), wide area network (WAN), Wi-Fi, etc. In one embodiment, the apparatus 105 is a computing system implemented in a cloud computing environment. As used herein, "cloud computing environment" refers to a processing environment comprising configurable computing physical and logical resources, for example, networks, servers, storage, applications, services, etc., and data distributed over the network, for example, the internet. The cloud computing environment provides on-demand network access to a shared pool of the configurable computing physical and logical resources.

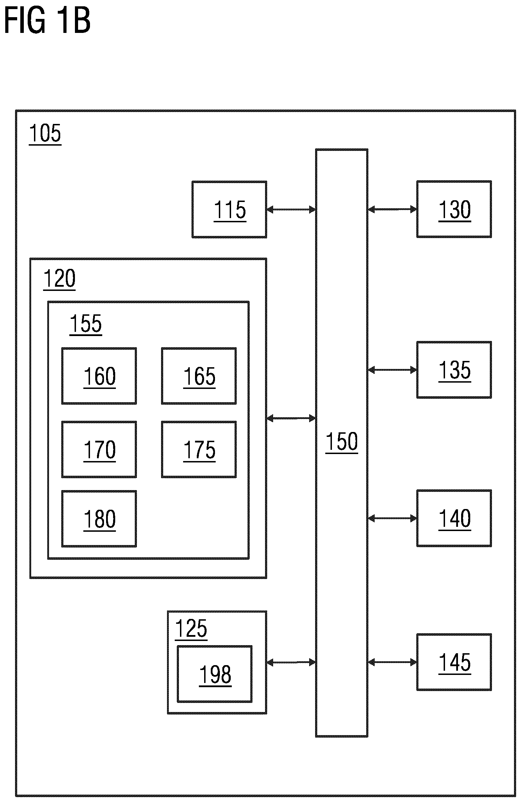

The apparatus 105 comprises a processing unit 115, a memory 120, a storage unit 125, a communication module 130, a network interface 135, an input unit 140, an output unit 145, a standard interface or bus 150 as shown in FIG 1B. The apparatus 105 may be a (personal) computer, a workstation, a virtual machine running on host hardware, a microcontroller, or an integrated circuit. As an alternative, the apparatus 105 may be a real or a virtual group of computers (the technical term for a real group of computers is "cluster", the technical term for a virtual group of computers is "cloud"). The term 'processing unit', as used herein, means any type of computational circuit, such as, but not limited to, a microprocessor, a micro-controller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processing unit 115 may also include embedded controllers, such as generic or programmable logic devices or arrays, application specific integrated circuits, single-chip computers, and the like. In general, a processing unit 115 may comprise hardware elements and software elements. The processing unit 115 may be configured for multithreading, i.e., the processing unit 115 may host different calculation processes at the same time, executing the either in parallel or switching between active and passive calculation processes.

The memory 120 may include one or more of a volatile memory and a non-volatile memory. The memory 120 may be coupled for communication with the processing unit 115. The processing unit 115 may execute instructions and/or code stored in the memory 120. A variety of computer-readable storage media may be stored in and accessed from the memory 120. The memory 120 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. The memory 120 comprises an optimization management module 155. The optimization management module 155 may be stored in the memory 120 in the form of machine-readable instructions and executable by the processing unit 115. These machine-readable instructions when executed by the processing unit 115 causes the processing unit 115 to enable an improved structural topology optimization as disclosed in the present disclosure. The optimization management module 155 comprises a preprocessing module 160, a suboptimal topology module 165, a solver initialization module 170, an optimal topology module 175 and a notification module 180 as shown in FIG 1B. The pre-processing module 160 is configured for receiving from a client device 110, by a processing unit 115, an input indicative of one or more load vectors at one or more nodes in a design space corresponding to the structure. The suboptimal topology module 165 is configured for applying a data-driven model to the input for predicting a suboptimal topology for the structure. The solver initialization module 170 is configured for initializing an optimization solver based on the suboptimal topology predicted. The optimal topology module 175 is configured for computing an optimal topology for the structure using the initialized optimization solver. The notification module 180 is configured for providing an output indicative of the optimal topology on a user interface of the client device 110.

The apparatus 105 may include a network interface 135 for communicating with the client devices 110 via the network 112. Each of the client devices 110A-N include a user interface (not shown) that enables a user to upload information relevant for performing structural topology optimization. The user interface may be further configured, by the apparatus 105, to generate an output indicative of a solution to the optimization problem. Further, the user interface may also be configured, by the apparatus 105 to generate an output indicative of, for example, similarity indices, complexity scores, number of iterations or results of other intermediate processes related to a given optimization technique. In an embodiment, the user interface of the client device 110 may be provided by a web-based or client-based application on the client device 110.

The storage unit 125 comprises a non-volatile memory which comprises a database 198. The database 198 stores one or more source optimization tasks. The input unit 140 may include in-put means such as keypad, touch-sensitive display, camera, etc. capable of receiving input signal. The bus 150 acts as interconnect between the processing unit 115, the memory 120, the storage unit 125, and the network interface 135. The communication module 130 enables the apparatus 105 to communicate with the client devices 110A-N. The communication module 130 may support different standard communication protocols such as Transport Control Protocol/Internet Protocol (TCP/IP), Profinet, Profibus, and Internet Protocol Version (IPv).

An apparatus 105 in accordance with an embodiment of the pre-sent disclosure includes an operating system employing a graphical user interface. The operating system permits multiple display windows to be presented in the graphical user interface simultaneously with each display window providing an interface to a different application or to a different in-stance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows™, a product of Microsoft Corporation located in Redmond, Washington may be employed if suitably modified. The operating system is modified or created in accordance with the present disclosure as described.

Those of ordinary skilled in the art will appreciate that the hardware depicted in FIGS 1A & 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

The present disclosure is not limited to a particular computer system platform, processing unit, operating system, or network. One or more aspects of the present disclosure may be distributed among one or more computer systems, for example, servers configured to provide one or more services to one or more client computers, or to perform a complete task in a distributed system. For example, one or more aspects of the present disclosure may be performed on a client-server system that comprises components distributed among one or more server systems that perform multiple functions according to various embodiments. These components comprise, for example, executable, intermediate, or interpreted code, which communicate over a network using a communication protocol. The present disclosure is not limited to be executable on any particular system or group of systems, and is not limited to any particular distributed architecture, network, or communication protocol.Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

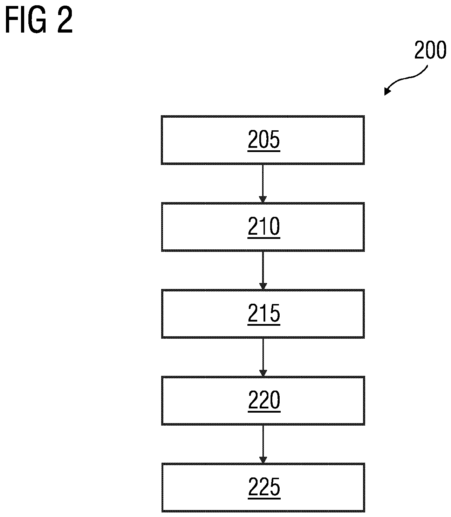

FIG 2 shows a flowchart of a method 200 for performing structural topology optimization, in accordance with an embodiment of the present invention. The method is implementable in the form of machine-readable instructions on the apparatus 105.

At step 205, an input for determining an optimal topology for a structure is received by the processing unit 115 from the client device 110. The input is indicative one or more load vectors corresponding to one or more nodes present in a design space corresponding to the structure. In an implementation, the load vectors are generated, at the processing unit, based on the input received from the client device 110. The input may include, for example, a choice of optimization algorithm, an objective function, and variable definitions. The variable definitions may indicate one or more parameters associated with the objective function, one or more constraints and one or more bounds corresponding to the variables in the objective function. Furthermore, the input may also include optimization parameters such as allowable tolerance, maximum iterations, penalization factor etc. In an example, the optimization problem is associated with structural topology optimization. The input may indicate variable definitions corresponding to volume fraction, material properties, loading and boundary conditions, etc. For example, the optimization algorithm may be one of SIMP or BESO. Further, the objective function may correspond to compliance minimization, while constraints may be associated with volumetric relations corresponding to the structure. The one or more optimization parameters include tolerance, penalization factor and maximum iterations.

In an embodiment, the input is received in the form of a configuration file. The configuration file is parsed to extract optimization data corresponding to the optimization problem. In an embodiment, the configuration file is generated based on interaction of a user with a user interface of the client device. The user interacts with the user interface through one or more input means. For example, the user inter-face may provide options for choosing the optimization algorithm from a plurality of optimization algorithms indicated in a drop-down menu. Based on the optimization algorithm chosen, the user interface may provide further options, to the user, for entering the objective function, the parameter definitions etc. Further, the configuration file is generated based on inputs entered by the user. Alternatively, the request may include a location within the database 198 wherein configuration file is stored. In another embodiment, the optimization data is identified based on interactions of the user with the user interface, and directly stored in the database 198.

At step 210, a data-driven model is applied to the input for predicting a suboptimal topology for the structure. In a preferred embodiment, the data-driven model is a deep learning model. In a further embodiment, the deep learning model is a variational autoencoder. In general, an autoencoder comprises an encoding layer and a decoding layer. The encoding layer reduces a higher dimensionality input to a lower dimensionality space called latent space. The latent space is deterministic in nature and is further up-sampled to generate a high dimensionality output. Based on the difference between the generated high-dimensionality output and a predetermined expected output, a loss function is evaluated, based on which model parameters associated with the autoencoder are optimized.

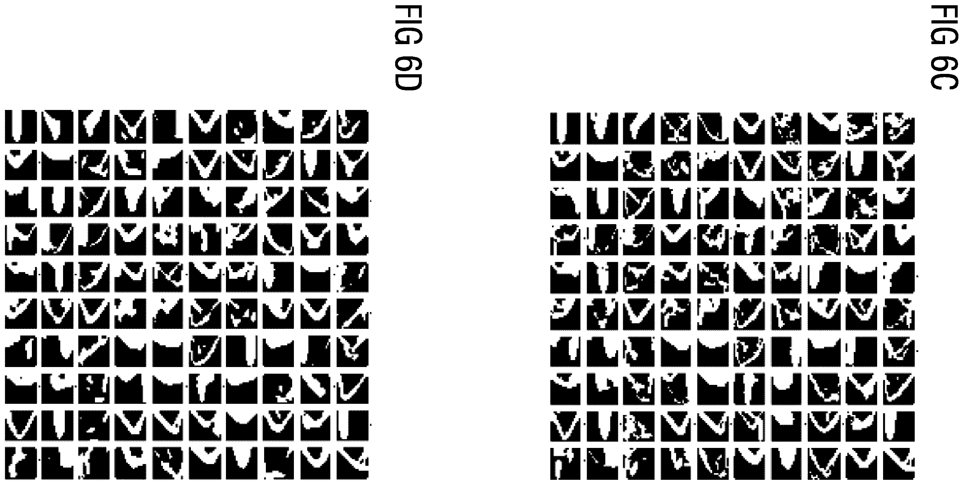

In case of a variational autoencoder, the latent space is probabilistic in nature, as opposed to the deterministic latent space in a regular autoencoder. The input to the variational autoencoder is a double channel image which passes through the encoder layer to form a latent space. From the latent space, a latent vector 'z' is sampled which, upon training, conforms to a lower-dimensional representation of the input image. The latent vector is further projected onto a higher dimensional space with the help of convolutional transpose layers to generate a single channel output image. In general, a distribution function corresponding to the probabilistic latent space of the variational autoencoder is close to an unknown distribution of a design space from which the higher dimensionality input data was generated. An example of an output generated by a VAE is shown later, in FIG 6D.

Advantageously, for a given random input which is unrelated to a training dataset used for training of the autoencoder, a variational autoencoder has better chances of generating a reasonable output as compared to normal autoencoder. Furthermore, the ability of variational autoencoder to approximate or learn the probability distribution of the design space, from which the input data is generated, allows the variational autoencoder to generate new data points by sampling from the learned probability distribution.

It must be understood that the shape and dimensions mentioned herein are only for illustration purposes. The shape and dimensions may vary depending upon nature of use of the variational autoencoder.

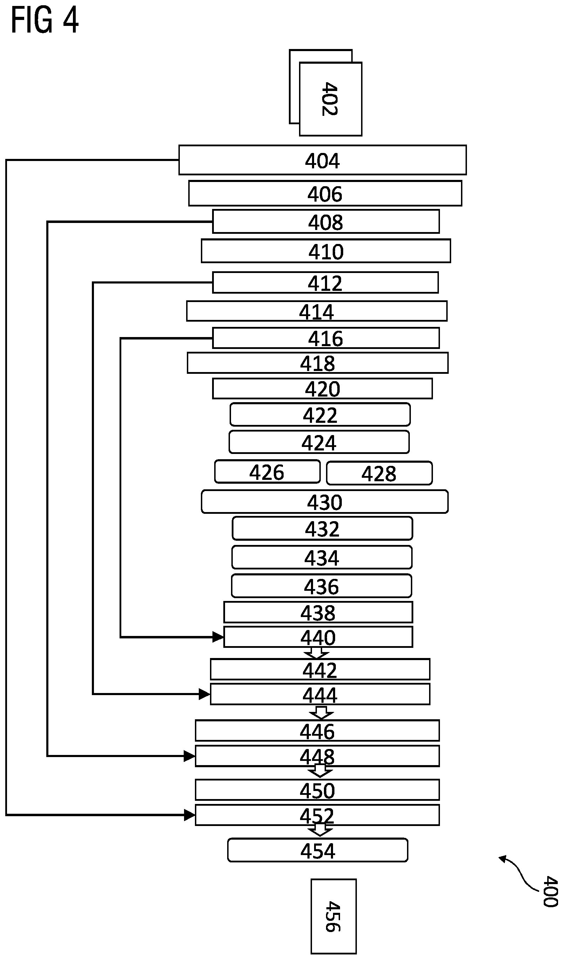

The U-Net-variational autoencoder is a modified version of the variational autoencoder, that comprises a U-shaped architecture wherein information from shallow layers and deep layers are merged. The U-Net variational autoencoder is almost similar to the variational autoencoder described earlier. Additionally, the encoder section of the U-Net variational autoencoder comprises a convolution and max-pooling layers followed by the latent section comprising with a flattening layer, dense layers and a reshape layer. Further, the decoder section of the U-Net variational autoencoder comprises transposed convolution layers that stack together outputs from the shallow convolution layers of the encoder section. Finally at the output layer, a single filter convolution layer based on sigmoid function is used to generate the required output i.e., the suboptimal topology. An exemplary embodiment of a U-Net VAE is described later with reference to FIG 4B. An example of an output (suboptimal topology) generated by a U-Net VAE is shown later in FIG 6C. Advantageously, combining information from shallow layers and deep layers helps in preserving neighbor-hood information amongst various pixels of an image.

Advantageously, the predicted suboptimal topology maybe close to the optimal topology or an intermediate structure which is likely to be generated in a classical topology optimization method such as SIMP or BESO. As the classical topology optimization method is now starting from a topology that has better chances of representing an early stage of an optimal topology, the computational cost or the total iterations to reach an optimal structure is less when compared with purely classical topology optimization methods.

At step 215, an optimization solver is initialized based on the suboptimal topology predicted. In an embodiment, initializing the optimization solver comprises initializing starting values for one or more design variables to values of corresponding one or more design variables in the suboptimal topology. In the present embodiment, the design variable corresponds to density value in each element within the design space. Herein, the term 'starting value' refers to initial values to be assigned for one or more variables associated with the optimization problem. The term 'element' or finite element as used herein refers to finite entities obtained by dividing/meshing the design space. Each of the elements may have different density values.

At step 220, an optimal topology is computed for the structure using the initialized optimization solver. The optimization solver may be based on a classical topology optimization method. In an embodiment, the classical topology optimization method is SIMP. In this algorithm, each element amongst the discretized finite elements, of a design domain, is allocated a density variable. The density variables determine distribution of material inside the design domain and, consequently the final topology. The topology optimization problem or the objective function may stated as follows,

$$\begin{aligned}
\text{minimize}_d \quad & c(u(d), d) = \{u\}^T [K] \{u\}, \\
\text{s.t.} \quad & V(d)/V_0 = v_f, \\
& [K(d)]\{u(d)\} = \{F\}, \\
& d_i \in [0, 1],
\end{aligned}$$

$$(1)$$

where compliance c is the objective function, K is a global stiffness matrix, u is nodal displacements and F is a global load vector. Here, d is a vector containing the density values corresponding to each of the elements, $V(d)$ is the total volume of material available, $V_0$ is maximum volume of material to be utilized for the design domain, and $v_f$ is target volume fraction. In practice, the optimization problem in equation (3.3) leads to inconceivable structures due to presence of intermediate density values. The SIMP approach uses a penalization method to mitigate this issue by discouraging the emergence of intermediate densities in the final optimal structure. The elemental stiffness matrices in this approach are computed as:

$$K_i = K_{min} + d_i^P (K_{max} - K_{min}), \, d_i \in [0, 1] \qquad (2)$$

$K_{max}$ and $K_{min}$ represent elemental stiffness matrices for a solid element and a void element, respectively.

Standard procedure calls for the void elements to have a little non-zero stiffness to avoid numerical instability.

P is the penalization parameter. Normally, the value of P is considered as more than three. The optimization problem may be solved using different optimization techniques such as, but not limited to, optimality criteria (OC), sequential linear programming (SLP), and the method of moving asymptotes (MMA).

In the present example, the OC-based method is used, and a heuristic-based updating scheme is used for the design variables, for the purpose of generating the training dataset for the variational autoencoder. The scheme is formulated as below:

$$
d_i^{new} = \begin{cases} max(d_{min}, d_i - m) & , \text{ if } d_i B_i^{\eta} \leq max(d_{min}, d_i - m), \\ min(1, d_i + m) & , \text{ if } d_i B_i^{\eta} \geq min(1, d_i + m), \\ d_i B_i^{\eta} & , \text{ otherwise,} \end{cases}
$$

$$(3)$$

where m is a positive move limit, $\eta$ is a numerical damping coefficient, and $B_i$ is

$$
B_i = \left(-\frac{\partial c}{\partial d_i}\right) / \left(\lambda \frac{\partial V}{\partial d_i}\right).
$$

$$(4)$$

Bisection search method is employed to determine the Lagrangian multiplier, $\lambda$. The sensitivity of objective function c is then calculated as:

$$
\frac{\partial c}{\partial d_i} = -pd_i^{p-1} u_i^T K_i u_i.
$$

$$(5)$$

wherein $u_i$ represents nodal displacements. To handle issues of mesh dependency and checkerboard patterns, a mesh sensitivity filter is used.

However, it must be understood that the present invention may also be extended to other classical topology optimization methods such as, but not limited to, hard kill BESO and soft kill BESO.

At step 225, an output indicative of the optimal topology is provided on a user interface of the client device 110.

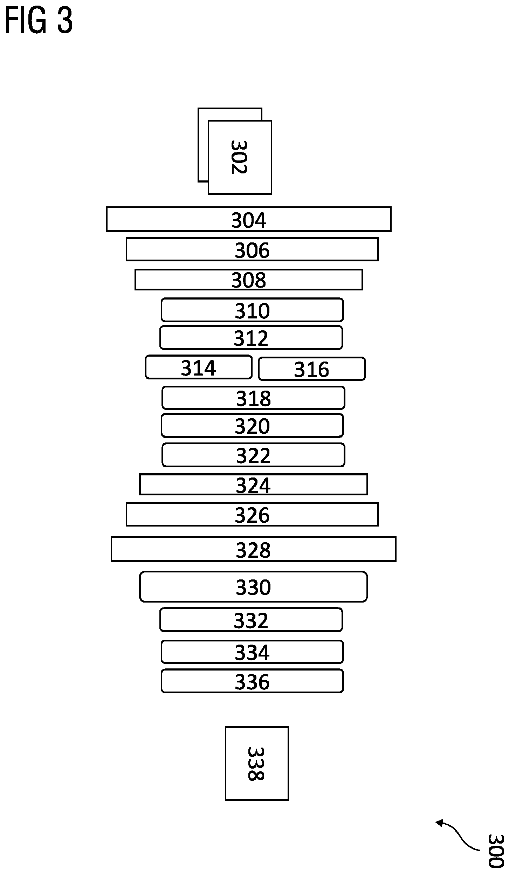

FIG 3 shows an exemplary variational autoencoder 300, in accordance with an embodiment of the present invention.

The variational autoencoder 300 comprises an encoder section that comprises 3 convolution layers with the outermost layer 304 comprising 32 filters, middle layer 306 comprising 64 filters and the innermost layer 308 comprising 128 filters. Each filter is of size 3X3. Each of the 3 convolution layers 304, 306 and 308 are based on the ReLU activation function. The la-tent section, following the encoder section, comprises a flattening layer 310, dense layers 312, 314, 316, 318, 320 and a reshape layer 322. Each of the dense layers are based on ReLU. The decoder section following the latent section, comprises transposed convolution layers 324, 326 and 328 corresponding to the convolution layers 304, 306 and 308 in the encoder section. The transposed convolution layers 324, 326 and 328 up-sample a latent vector, generated in the latent section, to create an up-sampled image. The up-sampled image is then passed through a flattening layer 330, two dense layers 332 and 334 and a reshape layer 326. The dense layer 332 is based on ReLU activation function and the dense layer 334 is based on sigmoid activation function. The purpose of using the sigmoid activation function in the dense layer 334 is to have output values in between 0 and 1 which is basically the range assumed for the density vector in topology optimization problem. Lastly, after reshaping, the final output is generated which is the suboptimal topology in present case.

FIG 4 shows an exemplary U-Net variational autoencoder 400, in accordance with an embodiment of the present invention. The U-Net variational autoencoder 400 is similar in structure to the variational encoder, with the encoder section comprising 5 convolution layers 404, 408, 412, 416 and 420, comprising 16, 32, 64, 128 and 256 filters respectively. Each of the convolution layers 404, 408, 412, 416 and 420, is based on Rectified Linear Unit (ReLU) activation function. The ReLU activation function returns 0 for any negative input, and for any positive value x the value is returned, and may be written as f(x)=max(0,x). Additionally, each of the convolution layers 404, 408, 412 and 416 are followed by max-pooling layers 406, 410, 414 and 418. The latent section comprises flattening layers 422, 430, dense layers 424, 426, 428, 432, 434 and a reshaping layer 436 configured as shown. The dense layers 422 and 432 comprise 512 filters, the dense layers 424 and 426 comprise 128 filters and the dense layer 434 comprises 3*3*256 filters. Each of the dense layers 424, 426, 428, 432, 434 is based on ReLU activation function. In the decoder section of the U-Net VAE, respective outputs 440, 444, 448 and 452 from the convolution layers 404, 408, 412 and 416 of the encoder section are respectively stacked together with transposed convolution layers 438, 442, 446 and 450 in the decoder section, as indicated by the arrows in FIG 4. Further, an output convolution layer based on sigmoid activation function generates an image representative of the suboptimal topology as output.

One of the most important hyper-parameters governing the effectiveness of a neural network is the loss function. During training of the neural network, a loss computed using the loss function, based on an actual output and a target output, is minimized in multiple iterations. In case of variational autoencoders, the objective of training is to minimize divergence between a probability distribution approximated via the variational autoencoder and probability distribution corresponding to a target topology. In particular, Kullback-Leible (KL) divergence can be defined as:

$$D_{\mathrm{KL}}(P\|Q) = \sum_x P(x)\log\left(\frac{P(x)}{Q(x)}\right)$$

$$(6)$$

where p(x) is the target distribution (optimal topology) and q(x) is the distribution approximated via neural network. Along with the KL divergence, another regularization has been chosen as the mean square error (MSE) which may be represented mathematically as:

$$\sum_{i=1}^{n} \frac{(\hat{y} - y)^2}{n}$$

$$(7)$$

where y is the target topology, ^y is the topology generated via neural network and n is the total number of elements in the domain. Thus, the total loss function consists of KL divergence and MSE which can be represented as:

$$L = D_{\mathrm{KL}}(P\|Q) + mse$$

$$(8)$$

The attributes such as weights, learning rate etc. are updated during the training, using an optimizer. In the present example, NADAM (Nesterov-accelerated Adaptive Moment Estimation) optimizer is used for updating the attributes.

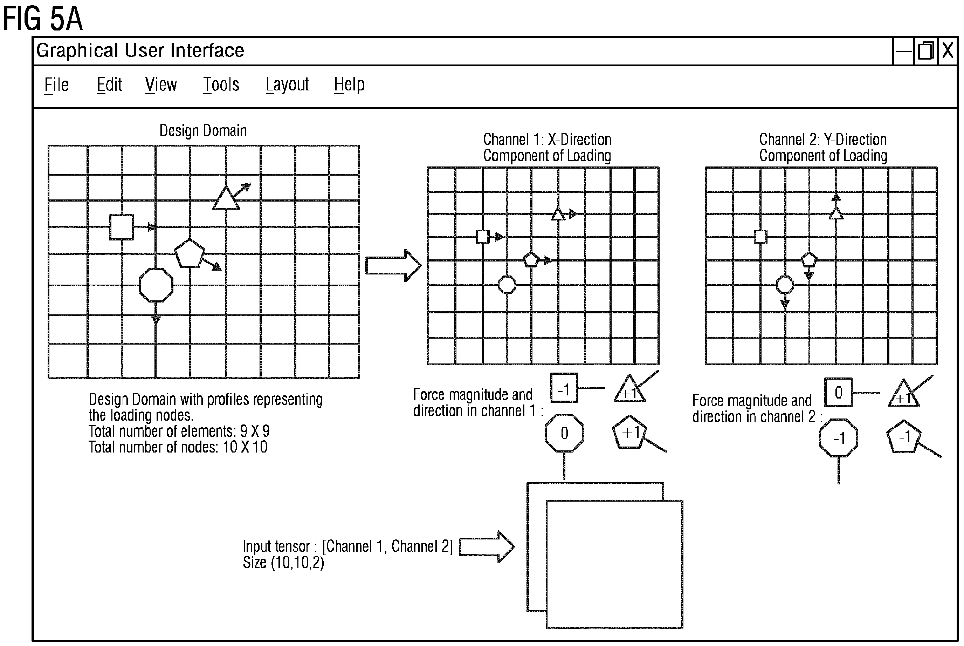

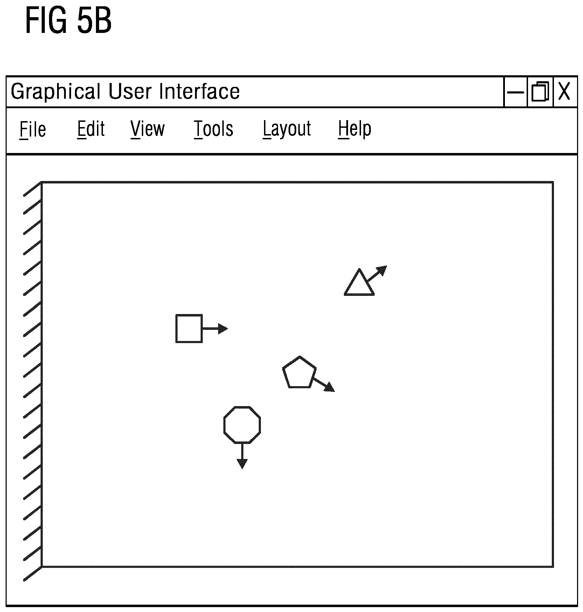

In an example, the dataset used for the training of the deep learning models is generated from 110 lines topology optimization code. The input data comprises load vectors. The number of loading nodes are kept random with the maximum number of nodes going up to 4. The input to the neural network is a tensor with dimensions (61, 61, 2), wherein 61 is the total number of nodes taken in x and y direction, 2 channels are considered to represent the x and y direction forces separately. As topology is dependent on orientation of the force rather than the magnitude of force, the magnitude is taken as unity. The described input may be more clearly understood from the schematic shown in FIG 5A. As may be noted, in total 4 nodes are loaded in design domain, the locations of which are represented using dots in FIG 5A. The design domain corresponds to a square shaped loaded cantilever beam as shown in FIG 5B, with loading at several locations in arbitrary directions. The loaded nodes are represented by dots. Further, the design domain is split into two channels, channel 1 which represents an X component of the global load vector and channel 2 which represents a corresponding Y component of the global load vector. Also, a shaded cubical representation is presented to denote the magnitude and direction of the loading in numerical sense for channel 1 and 2. The shade of each block in the cube of size 4X4 represents the corresponding loading node, and the numerical value inside it denotes the magnitude of the respective force component. Further, the input tensor is generated by stacking both the channels together. Corresponding to the discussed input, in total 12000 topologies were generated for the training of deep learning models. Other parameters for the topology optimization setting were taken as:

volume fraction = 0.3

filter radius = 1.5

elements in x and y direction = 60

penalization parameter = 3

As the number of elements in x and y directions were kept 60, thus the size of the output topology becomes (60,60) i.e., total number of elements in which the domain is discretized in x and y directions are 60.

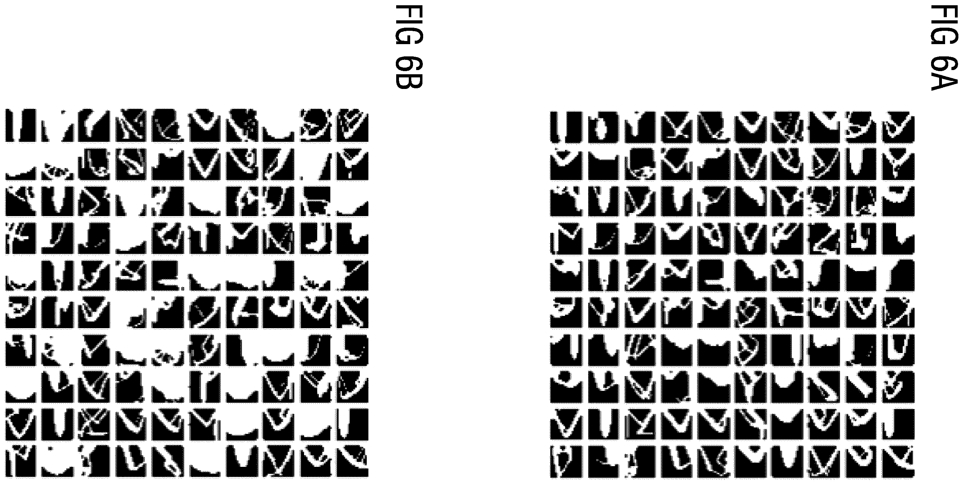

FIG 6A and 6B represent topology optimization results obtained using different methodologies. In order to evaluate the effectiveness of the proposed approach, a total of 100 different test datasets each having different loading scenarios were considered. The test datasets have been generated from SIMP and BESO for same boundary and loading conditions for the design space shown in FIG 5A. Given the loading conditions and boundary condition, the task is to optimize the material distribution for the prescribed domain.

The test topologies generated with classical algorithms SIMP and BESO are presented in FIG 6A and 6B respectively. Furthermore, the predicted topologies for the test dataset from the U-Net VAE and VAE models are shown in FIGS 6C and 6D respectively. It may be observed that the topologies generated from VAE in Figure 6D seems much smoother than the ones generated from U-Net VAE in FIG 6C, but when compared with the ones in FIG 6A and 6B, it may be noted that the topologies generated via U-Net VAE tends to capture more detailing about the shape and connectivity of various links present in the topology. As these predicted topologies falls under the categories of near optimal topologies and the ones which could be an intermediate structure occurring during the topology optimization in classical methods, thus to come up with an optimal structure, the classical methods are then initialized with these predicted topologies, which we refer to as refined topologies hereinafter.

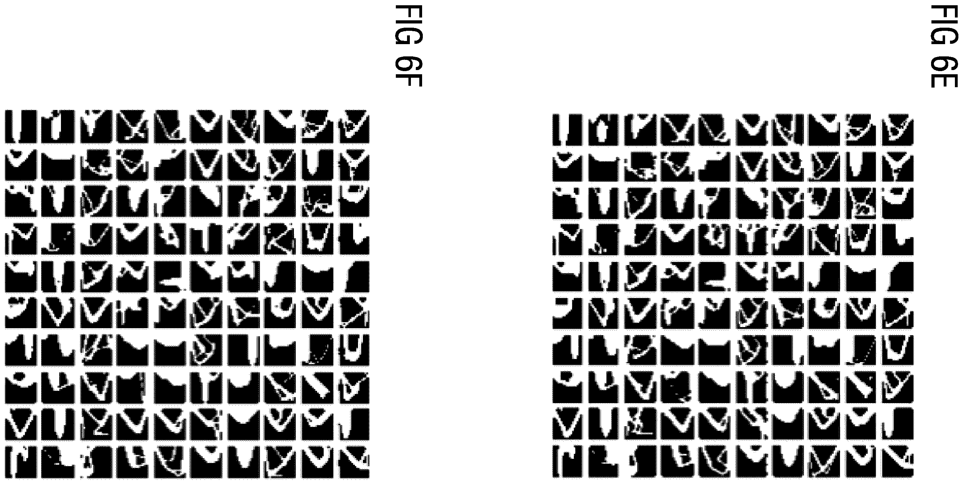

As a result, the refined topologies obtained using SIMP based on suboptimal topologies generated via U-Net VAE and VAE respectively are shown in FIGS 6E and 6F. When compared with the topologies shown in FIG 6A, it can be observed that around 30 percent of the topologies shows exact material distribution and shape as in the ones in topologies generated from classical methods, and around 20 percent of the topologies shows slight deviation with an additional link or some sort of shape variation. Furthermore, in some cases it was noted that the refined topologies converge better as compared to the classical method. An important aspect chosen for the comparison of the refined topologies with those generated from the classical methods, is the compliance value.

Advantageously, the present invention also reduces number of iterations required for convergence to the optimal topology, thereby reducing computational resources required for performing structural topology optimization, compared to classical optimization techniques.

While the invention has been illustrated and described in de-tail with the help of a preferred embodiment, the invention is not limited to the disclosed examples. Other variations may be deducted by those skilled in the art without leaving the scope of protection of the claimed invention.

List of Reference

| | |
|---|---|
| 100 | system |
| 105 | apparatus |
| 110A-N | client devices |
| 112 | network |
| 115 | processing unit |
| 120 | memory |
| 125 | storage unit |
| 130 | communication unit |
| 135 | network interface |
| 140 | input unit |
| 145 | output unit |
| 150 | standard interface or bus |
| 155 | optimization management module |
| 160 | preprocessing module |
| 165 | suboptimal topology module |
| 170 | solver initialization module |
| 175 | optimal topology module |
| 180 | notification module |
| 198 | database |

**Claims**

**1.** A computer-implemented method (200) for performing structural topology optimization for a structure, the method comprising:

receiving from a client device, by a processing unit (115), an input indicative of one or more load vectors at one or more nodes in a design space corresponding to the structure;
applying a data-driven model to the input for predicting a suboptimal topology for the structure;
initializing an optimization solver based on the suboptimal topology predicted;
computing one or more design variables corresponding to an optimal topology for the structure using the initialized optimization solver; and
providing an output indicative of the optimal topology on a user interface of the client device (110).

2. The method according to claim 1, wherein the input comprises a two-channel input tensor corresponding to the load vectors.

3. The method according to claim 1, wherein the data-driven model is a deep learning model.

4. The method according to claim 1, wherein the deep learning model is a U-Net variational autoencoder.

5. The method according to claim 4, wherein the U-Net variational autoencoder is trained based on topology optimization code.

6. The method according to claim 1, wherein the optimization solver computes the optimal topology based on one of Solid Isotropic Material with Penalization (SIMP) topology optimization and Bi-directional Evolutionary Structural Optimization (BESO).

7. The method according to claim 1, wherein the one or more design variables comprises density value.

8. An apparatus (105) comprising:

one or more processing units (115); and
a memory unit (120) communicatively coupled to the one or more processing units (115), wherein the memory unit (120) comprises an optimization management module (155) stored in the form of machine-readable instructions executable by the one or more processing units (115), wherein the optimization management module (155) is configured to perform method steps according to any of the claims 1 to 7.

9. A system (100) comprising:

one or more client devices (110A-N); and
an apparatus (105) according to claim 8, communicatively coupled to the one or more client devices (110A-N), wherein the apparatus (105) is configured for performing structural topology optimization based on inputs received from the one or more client devices (110A-N), according to any of the method claims 1 to 7.

10. A computer-program product having machine-readable instructions stored therein, which when executed by one or more processing units (115), cause the processing units (115) to perform a method according to any of the claims 1 to 7.

FIG 1A

# FIG 1B

FIG 2

200

```
┌─────────────────────────┐
│           205           │
└─────────────────────────┘
            │
            ▼
┌─────────────────────────┐
│           210           │
└─────────────────────────┘
            │
            ▼
┌─────────────────────────┐
│           215           │
└─────────────────────────┘
            │
            ▼
┌─────────────────────────┐
│           220           │
└─────────────────────────┘
            │
            ▼
┌─────────────────────────┐
│           225           │
└─────────────────────────┘
```

# FIG 3

302

304

306

308

310

312

314 316

318

320

322

324

326

328

330

332

334

336

338

300

# FIG 4

# FIG 5A

**Graphical User Interface** — ☐ X

File    Edit    View    Tools    Layout    Help

Design Domain

Channel 1: X-Direction
Component of Loading

Channel 2: Y-Direction
Component of Loading

Design Domain with profiles representing
the loading nodes.
Total number of elements: 9 X 9
Total number of nodes: 10 X 10

Force magnitude and
direction in channel 1 :    -1 — △ +1

0    +1

Force magnitude and
direction in channel 2 :    0 — △ +1

-1    -1

Input tensor : [Channel 1, Channel 2]
Size (10,10,2)

# FIG 5B

FIG 6A

FIG 6B

FIG 6C

FIG 6D

FIG 6E

FIG 6F

Europäisches
Patentamt

European
Patent Office

Office européen
des brevets

## EUROPEAN SEARCH REPORT

**Application Number**

EP 24 18 4881

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOO YOUNGHWAN ET AL: "Unit Module-Based Convergence Acceleration for Topology Optimization Using the Spatiotemporal Deep Neural Network", IEEE ACCESS, IEEE, USA, vol. 9, 5 November 2021 (2021-11-05), pages 149766-149779, XP011887948, DOI: 10.1109/ACCESS.2021.3125014 [retrieved on 2021-11-10] | 1-3,7-10 | INV. G06F30/27 ADD. G06F111/06 |
| Y | * abstract; figures 1-14; tables 1-6 * * page 149767, paragraph A - page 149769, paragraph B * | 4-6 | |
| X | YU YONGGYUN ET AL: "Deep learning for determining a near-optimal topological design without any iteration", STRUCTURAL AND MULTIDISCIPLINARY OPTIMIZATION, SPRINGER BERLIN HEIDELBERG, BERLIN/HEIDELBERG, vol. 59, no. 3, 28 October 2018 (2018-10-28), pages 787-799, XP036733651, ISSN: 1615-147X, DOI: 10.1007/S00158-018-2101-5 [retrieved on 2018-10-28] | 1-3,7-10 | |
| A | * abstract; figures 1-11 * * page 790, paragraph 3.1 - page 797, paragraph 3.3 * | 4-6 | **TECHNICAL FIELDS SEARCHED (IPC)** G06F |
| Y | US 2023/177227 A1 (YE WENJING [CN]) 8 June 2023 (2023-06-08) | 4-6 | |
| A | * abstract; claim 8; figures 1A-1B, 3, 25-27 * * page 4, paragraph [0068] * * page 5, paragraph [0070] - page 6, paragraph [0075] * | 1-3,7-10 | |

-/--

The present search report has been drawn up for all claims

| Place of search | Date of completion of the search | Examiner |
|---|---|---|
| Munich | 7 November 2024 | Fernandez, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 18 4881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEUNGYEON SHIN ET AL: "Topology Optimization via Machine Learning and Deep Learning: A Review", ARXIV.ORG, CORNELL UNIVERSITY LIBRARY, 201 OLIN LIBRARY CORNELL UNIVERSITY ITHACA, NY 14853, 19 October 2022 (2022-10-19), XP091348622, * abstract; figures 1-23; tables 1-3 * ----- | 1-10 | |
| A | SHINTARO YAMASAKI ET AL: "Data-driven topology design using a deep generative model", ARXIV.ORG, CORNELL UNIVERSITY LIBRARY, 201 OLIN LIBRARY CORNELL UNIVERSITY ITHACA, NY 14853, 9 March 2021 (2021-03-09), XP081895808, * abstract; figures 1-25 * ----- | 1-10 | |

**TECHNICAL FIELDS SEARCHED (IPC)**

The present search report has been drawn up for all claims

| Place of search | Date of completion of the search | Examiner |
|---|---|---|
| Munich | 7 November 2024 | Fernandez, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 18 4881

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | Publication date | Patent family member(s) | Publication date |
|---|---|---|---|
| US 2023177227 A1 | 08-06-2023 | CN 116245004 A | 09-06-2023 |
| | | US 2023177227 A1 | 08-06-2023 |

EPO FORM P0459